# EUROPEAN PATENT APPLICATION

(11) **EP 0 682 355 A1**
(43) Date of publication of application: **15.11.1995**
(21) Application number: 94912685.8
(22) Date of filing: 15.04.1994
(51) Int. Cl.: H01J 61/30, H01J 61/56, H01J 9/24

(54) **BULB-FORM FLUORESCENT LAMP AND METHOD FOR ITS MANUFACTURE**

(30) Priority: 29.11.1993 JP 68391/93 U
(71) Applicant: NIPPON LIGHTING ELECTRIC CO. LTD., Nerima-ku, Tokyo 179 (JP)
(72) Inventor: TAJIMA, Takashi Nippon Lighting Electric Co. Ltd., Nerima-ku Tokyo 179 (JP)
(74) Representative: Melzer, Wolfgang, Dipl.-Ing.
(86) International application number: JP9400628
(87) International publication number: WO9515003

(57) **Abstract**

A base (1) can be screwed into the socket of a bulb. The light emitting tube (2) which is spiral substantially along the contour (4b) of a bulb so that the size is not much larger than that of a conventional bulb. The lighting device is arranged inside the spiral light emitting tube.

## Description

### Technical Field

The present invention relates to a bulb-shaped fluorescent lamp having a base which can be screwed in a socket for a bulb and to a manufacturing method of such a lamp.

### Background Art

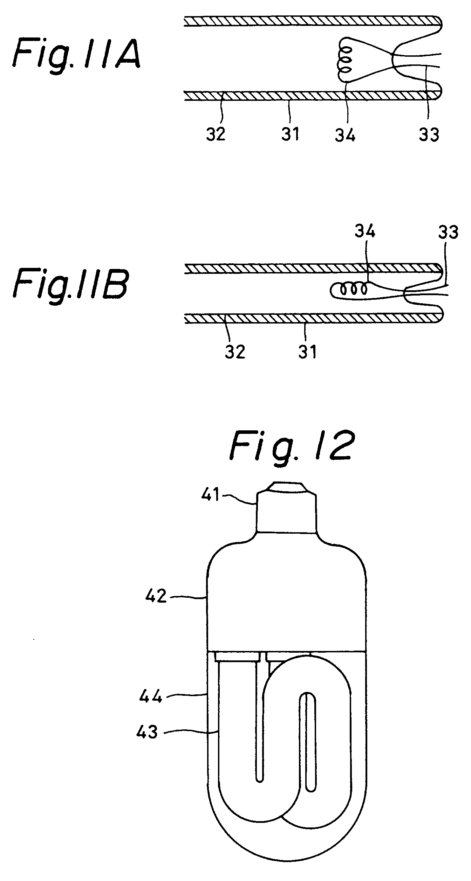

Fig. 12 shows a conventional fluorescent lamp having a base similar to that for a bulb. As a base 41 of the fluorescent lamp, a base of the type similar to a base for the conventional bulb, for example, E-26 is used. Therefore, the fluorescent lamp shown in Fig. 12 can be attached to a lighting equipment using the base of the E-26 type and can be used.

By attaching the lamp to the lightning equipment, an electric power is supplied through the base 41 and a current flows to a lighting device, which will be described hereinafter. The lighting device is built in a supporting base plate 42. A curved arc tube 43, that is, a double U-shaped arc tube is attached to the supporting plate 42. In the example of Fig. 12, a lamp cover 44 is provided so as to cover the double U-shaped arc tube 43.

Although the lamp cover 44 is provided for the fluorescent lamp in Fig. 12 used for explanation as an example, a fluorescent lamp having no lamp cover 44, a fluorescent lamp in which the rectilinear arc tube 43 is directly attached to the supporting base plate 42, and the like are known.

The fluorescent lamp, however, conventionally needs the supporting base plate 42 having the lighting device therein as compared with the bulb, so that a height of fluorescent lamp as a whole is large. When the fluorescent lamp is attached to the conventional lighting device for the bulb, consequently, there are problems such that the front edge of the fluorescent lamp is projected out of the lighting device and that the fluorescent lamp cannot be attached to the lighting device.

### Disclosure of Invention

An object of the invention, therefore, is to provide a bulb-shaped fluorescent lamp which is smaller and brighter than a conventional fluorescent lamp and also to provide a manufacturing method of such a lamp.

The bulb-type fluorescent lamp having a spiral arc tube of the invention is brighter and can be miniaturized as compared with the conventional fluorescent lamp.

According to the invention, in order to accomplish those objects, there is provided a bulb-type fluorescent lamp characterized by comprising: a spiral arc tube; a base which can be screwed in a socket for a bulb; and a lighting device for lighting.

Further, according to the invention, there is provided a bulb-type fluorescent lamp comprising: a spiral arc tube; a base which can be screwed in a socket for a bulb; and a lighting device for lighting, characterized in that a part or all of the lighting device is arranged in an inner space formed by the spiral arc tube.

According to the invention, there is provided a manufacturing method of a bulb-type fluorescent lamp characterized by comprising: a step of winding the arc tube so as to have a flexibility by a red heat to the outer peripheral portion of the lighting device; a step of cooling and hardening the arc tube; and after that, a step of connecting a base to the lighting device.

### Brief Description of Drawings

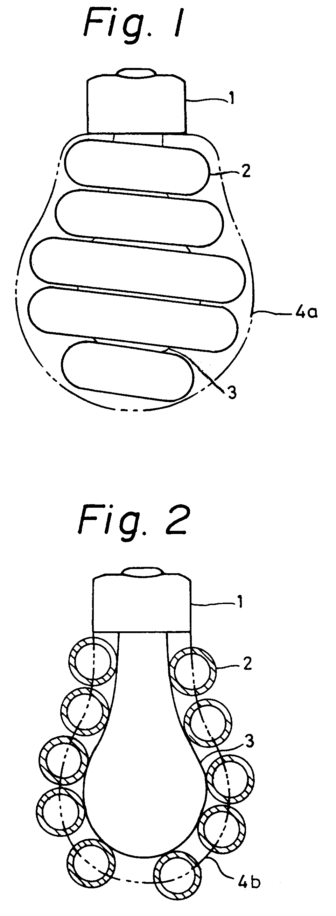

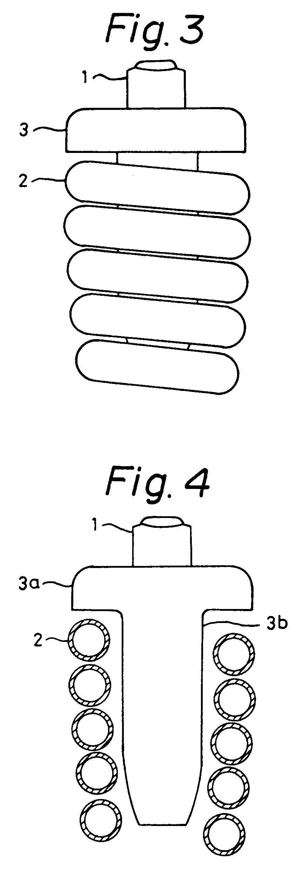

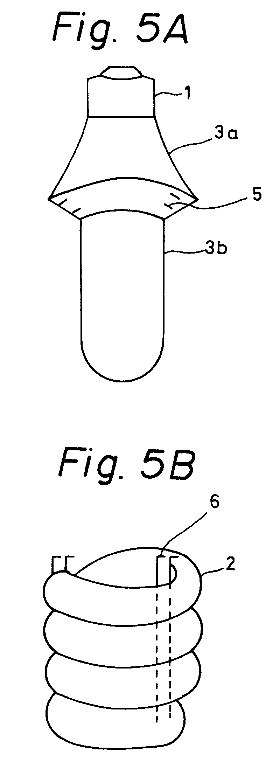

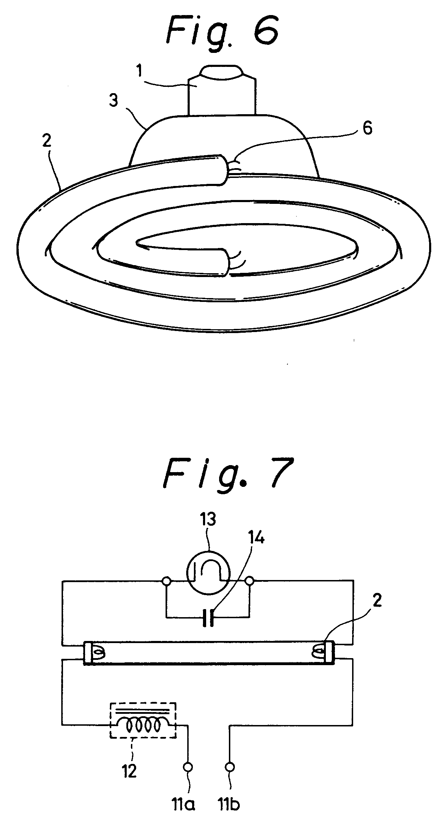

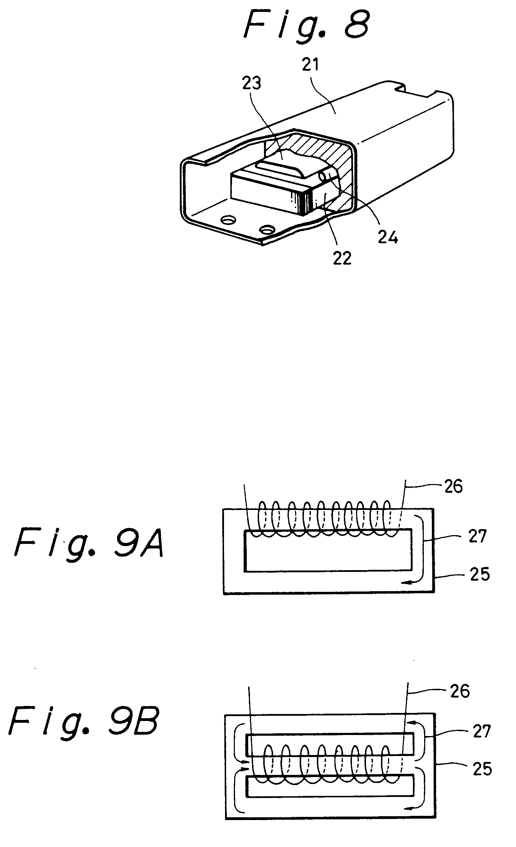

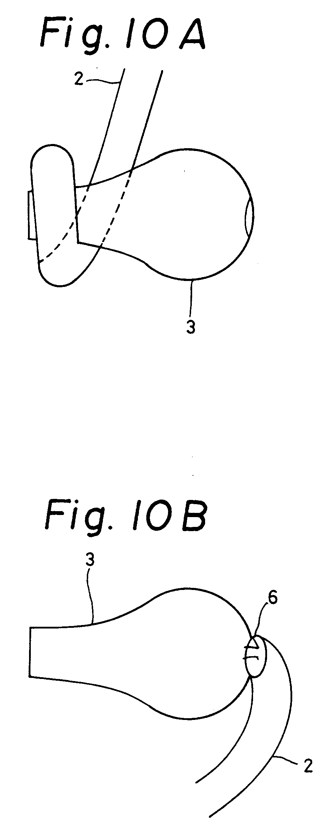

Fig. 1 is a schematic diagram of an embodiment of a bulb-shaped fluorescent lamp according to the invention; Fig. 2 is a cross sectional view of a bulb-shaped fluorescent lamp of an example according to the invention; Fig. 3 is a schematic diagram of an embodiment of the fluorescent lamp according to the invention; Fig. 4 is a cross sectional view of the fluorescent lamp of an example according to the invention; Figs. 5A and 5B are schematic diagrams of an embodiment of a detachable fluorescent lamp according to the invention; Fig. 6 is a schematic diagram of an embodiment of a spiral-type fluorescent lamp according to the invention; Fig. 7 is a circuit diagram of an example of a lighting device of the fluorescent lamp; Fig. 8 is an embodiment of an external view of a ballast of the lighting device; Figs. 9A and 9B are explanatory diagrams of the ballast; Figs. 10A and 10B are schematic diagrams showing an embodiment of a manufacturing method of the bulb-type fluorescent lamp according to the invention; Figs. 11A and 11B are schematic diagrams of an embodiment of an arc tube of the bulb-type fluorescent lamp according to the invention; and Fig. 12 is a schematic diagram of an example of a conventional fluorescent lamp.

### Best Mode for Carrying Out the Invention

Embodiments of the invention will now be explained hereinbelow with reference to the drawings.

### (1) First embodiment of fluorescent lamp

Fig. 1 shows an embodiment of a bulb-type fluorescent lamp according to the invention. It is now assumed that a base shown by reference numeral 1 has a type similar to that of the conventional bulb, for example, E-26. Therefore, the base 1 can be screwed in a socket for a bulb. An arc tube 2 is spirally wound around
the outer periphery of a lighting device section 3 including a lighting device attached to the base 1. In this instance, a space may be also provided between the spirally wound arc tube 2 and the vertical fluorescent lamp in consideration of a cooling effect and a light diffusing effect. Reference numeral 4a denotes a lamp cover attached around the spirally wound arc tube 2. The use of the lamp cover 4a can prevent the arc tube 2 from becoming dirty.

Fig. 2 shows a cross sectional view of the bulb-type fluorescent lamp of the first embodiment shown in Fig. 1. When the arc tube 2 is spirally wound around the outer periphery of the lighting device section 3, a size of lighting device section 3 attached to the base 1 is determined in a manner such that the arc tube 2 doesn't remarkably exceed a size of conventional bulb, namely, the center of the arc tube 2 almost traces an outer shape 4b of the bulb. Thus, the lighting device section 3 is arranged in the inner space of the arc tube 2.

### (2) Second embodiment of fluorescent lamp

Fig. 3 shows the second embodiment of the invention and Fig. 4 shows a cross sectional view of a fluorescent lamp shown in Fig. 3. Reference numeral 1 denotes the base. The arc tube 2 is wound in a spiral shape and the lighting device section 3 is enclosed in the inner space formed by the spirally wounded arc tube 2. The lighting device section 3 comprises a lighting device section 3b arranged in the above-mentioned inner space and a supporting base plate 3a including the lighting device which is arranged outside. The supporting base plate 3a is connected to the base 1.

In this instance, it is also possible to increase the brightness by coating a fluorescent paint or by coating a material having a high reflectance or by providing a film of such a material to the portion of the lighting device section 3 of the fluorescent lamp. Further, although not shown, it is also possible to provide a lamp cover around the fluorescent lamp of the invention in a manner similar to the lamp cover 4a shown in Fig. 1.

### (3) Third embodiment of fluorescent lamp

Figs. 5A and 5B show detachable fluorescent lamps of the third embodiment of the invention. Fig. 5A shows a fixing section of the fluorescent lamp. The supporting base plate 3a is attached to the base 1 and further, the lighting device section 3b is attached to the supporting base plate 3a. An electric contact which is commonly used as a jointer indicated by reference numeral 5 is provided for the supporting base plate 3a.

Fig. 5B shows the spiral arc tube 2 which is detachable for the fixing section of the fluorescent lamp shown in Fig. 5A. Filament connection wires which are commonly used as jointers shown by reference numeral 6 are attached from both edges of the arc tube 2 to the electric contact 5 which is commonly used as a jointer, thereby enabling the fluorescent lamp to be lit on. When comparing the life of a ballast (lighting device) and the life of the arc tube, the life of the arc tube is generally shorter. When the detachable fluorescent lamp is used, therefore, it is economically advantageous since it is sufficient to replace the arc tube only.

### (4) Fourth embodiment of fluorescent lamp

Fig. 6 shows an example of a vortex type fluorescent lamp in which the arc tube 2 is formed in a spiral shape in the horizontal direction. A current is supplied to the lighting device section 3 including the lighting device through the base 1. The arc tube 2 has a vortex shape which is spiral in the horizontal direction. When a current is supplied from the filament connection wire 6 which is commonly used as a jointer, the fluorescent lamp can be lit on. Different from the bulb-type fluorescent lamp and the like mentioned above, since the lamp is spiral in the horizontal direction, the vortex type fluorescent lamp can obtain higher illuminance than the bulb-type fluorescent lamp and the like.

### (5) An embodiment of lighting device

Fig. 7 shows a schematic diagram of the lighting device which is built in the lighting device section 3. When an AC power is supplied from input terminals 11a and 11b, a discharge occurs between a bimetal electrode and a fixed electrode of a glow starter 13. A capacitor 14 for preventing noises is connected across the glow starter 13. The bimetal electrode is deformed by a heat generation due to the discharge, thereby closing a contact in the glow starter 13.

By closing the contact, the electrodes in the arc tube 2 are sufficiently heated. When the lamp enters a state in which thermions are emitted, the bimetal electrode of the glow starter 13 is returned to the original position and the contact is open. At the moment when the contact is open, a large kick voltage occurs in a ballast 12 and the arc tube 2 is lit on by the kick voltage. As an example, it is also possible to generate the kick voltage by using an electronic starter and to light on the arc tube 2. Further, a semiconductor device can be also used for the lighting device.

Fig. 8 shows an example of a perspective view of a ballast with a part cut away which is used for the lighting device. Reference numeral 21 denotes a casing and 22 indicates a transformer, which will be described hereinafter. A coil 23 is wound around the transformer 22 and a protecting apparatus 24 is attached thereto.

Figs. 9A and 9B show schematic diagrams of the transformer 22 and coil 23. Reference numeral 25 denotes a laminated silicon steel plate. An electric wire shown by reference numeral 26 is wound around the laminated silicon steel plate 25, thereby allowing the current to flow. When the current flows in the electric wire 26, a line of magnetic force 27 is generated in the laminated silicon steel plate 25, so that reactance and impedance effects occur in the coil 23.

### (6) Embodiment of manufacturing method of bulb-type fluorescent lamp

Figs. 10A and 10B show examples of a manufacturing method of the bulb-type fluorescent lamp shown in Fig. 1. In Fig. 10A, one end of the arc tube 2 is fixed to the base side (not shown) of the lighting device section 3 and the arc tube 2 is wound around the lighting device section 3. In this instance, in the case where the arc tube 2 which is wound is made of, for example, soda glass, the temperature of the red heat rises to 800 to 900 °C. The arc tube 2 is wound so as to rotate the lighting device section 3. After the arc tube 2 was wound to the lighting device section 3, the other end of the arc tube 2 is fixed. After both ends of the arc tube 2 were fixed, a base (not shown) is attached.

In Fig. 10B, one end of the arc tube 2 is fixed to the side different from the base side (not shown) of the lighting device section 3 by using the filament connection wires 6 which are used as a jointer. The fixed arc tube 2 is wound to the lighting device section 3 as mentioned above. After the arc tube 2 was wound to the lighting device section 3, the other end of the arc tube 2 is fixed. After both ends of the arc tube 2 were attached, the base (not shown) is attached as mentioned above. In Figs. 10A and 10B, although the arc tube 2 is wound to the lighting device section 3 by rotating the lighting device section 3, the rotating direction of the lighting device section 3 in this instance can be properly selected irrespective of the invention.

Figs. 11A and 11B show an example and another example of a filament section of the arc tube. Fig. 11A shows a light emitting section of the arc tube which is similar to the conventional one. Reference numeral 31 denotes a glass tube. A fluorescent material 32 is coated to the inside of the glass tube 31. Reference numeral 33 indicates a lead wire and a filament connected to the lead wire 33 is shown by reference numeral 34. As shown in Fig. 11A, the filament 34 of the conventional light emitting section is arranged perpendicularly to the glass tube 31.

The arc tube having the filament structure similar to the conventional one can be also used in the invention. In the invention, however, it is preferable that a diameter of arc tube is small because the arc tube is spirally wound as mentioned above. A filament structure which is suitable to such an object is shown in Fig. 11B. The fluorescent material 32 is coated to the inner wall of the glass tube 31 and the filament 34 connected to the lead wire 33 is arranged almost in parallel with the glass tube. When comparing the sizes of the diameters of the glass tube 31 in Figs. 11A and 11B, by arranging the filament 34 almost in parallel with the glass tube 31, the diameter of the glass tube 31 shown in Fig. 11B can be reduced. As mentioned above, the bulb-type fluorescent lamp can be manufactured without remarkably exceeding the outer shape 4b of the conventional bulb.
- 1:: BASE
- 2:: ARC TUBE
- 3:: LIGHTING DEVICE SECTION
- 5:: ELECTRIC CONTACT COMMONLY USED AS A JOINTER
- 6:: FILAMENT CONNECTION WIRE COMMONLY USED AS A JOINTER
- 31:: GLASS TUBE
- 32:: FLUORESCENT MATERIAL
- 33:: LEAD WIRE
- 34:: FILAMENT

## Claims

1. A bulb-shaped fluorescent lamp characterized by comprising: a spiral arc tube; a base which can be screwed in a socket for a bulb; and a lighting device for lighting.

2. A bulb-shaped fluorescent lamp comprising: a spiral arc tube; a base which can be screwed in a socket for a bulb; and a lighting device for lighting,
characterized in that a part or all of said lighting device is arranged in an inner space which is formed by said spiral arc tube.

3. A manufacturing method of a bulb-shaped fluorescent lamp characterized by comprising:
a step of spirally winding an arc tube so as to have a flexibility by a red heat to an outer peripheral portion of a lighting device;
a step of cooling and hardening said arc tube; and a step of connecting a base to said lighting device after that.
